(19)

Europäisches
Patentamt
European
Patent Office
Office européen
des brevets

(11) **EP 2 687 040 B1**

(12) **EUROPEAN PATENT SPECIFICATION**

(45) Date of publication and mention
of the grant of the patent:
**16.09.2015 Bulletin 2015/38**

(51) Int Cl.:
*H04L 12/18* ^(2006.01)   *H04W 72/00* ^(2009.01)
*H04W 24/08* ^(2009.01)   *H04L 12/24* ^(2006.01)

(21) Application number: **11708270.1**

(86) International application number:
**PCT/EP2011/053877**

(22) Date of filing: **15.03.2011**

(87) International publication number:
**WO 2012/123023 (20.09.2012 Gazette 2012/38)**

(54) **METHODS AND DEVICES FOR ESTIMATING TERMINALS INTEREST IN SERVICES**

VERFAHREN UND VORRICHTUNGEN ZUR BEURTEILUNG DES DIENSTINTERESSES VON
ENDGERÄTEN

PROCÉDÉS ET DISPOSITIFS D'ESTIMATION D'INTÉRÊT DE TERMINAUX POUR DES SERVICES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.01.2014 Bulletin 2014/04**

(73) Proprietor: **Nokia Solutions and Networks Oy
02610 Espoo (FI)**

(72) Inventor: **KOSKINEN, Henri, Markus
FIN-02600 Espoo (FI)**

(74) Representative: **Borgström, Markus et al
Nokia Solutions and Networks
Management International GmbH
NET T&I IPR
St-Martin-Strasse 76
81541 München (DE)**

(56) References cited:
**EP-A1- 2 112 856**

- **"3rd Generation Partnership Project; Technical
  Specification Group Radio Access Network;
  Evolved Universal Terrestrial Radio Access (E-
  UTRA) and Evolved Universal Terrestrial Radio
  Access Network (E-UTRAN); Overall description;
  Stage 2 (Release 10)", 3GPP STANDARD; 3GPP
  TS 36.300, 3RD GENERATION PARTNERSHIP
  PROJECT (3GPP), MOBILE COMPETENCE
  CENTRE ; 650, ROUTE DES LUCIOLES ; F-06921
  SOPHIA-ANTIPOLIS CEDEX ; FRANCE, no.
  V10.2.0, 18 December 2010 (2010-12-18) , pages
  1-200, XP050462130, [retrieved on 2010-12-18]**
- **ERICSSON ET AL: "Counting for MBMS Rel-10",
  3GPP DRAFT; R2-103865 COUNTING FOR MBMS
  REL-10, 3RD GENERATION PARTNERSHIP
  PROJECT (3GPP), MOBILE COMPETENCE
  CENTRE ; 650, ROUTE DES LUCIOLES ; F-06921
  SOPHIA-ANTIPOLIS CEDEX ; FRANCE, vol. RAN
  WG2, no. Stockholm, Sweden; 20100628, 22 June
  2010 (2010-06-22), XP050451268, [retrieved on
  2010-06-22]**
- **ERICSSON ET AL: "On the need of counting
  MBMS UEs in idle mode", 3GPP DRAFT;
  R2-104776 ON THE NEED OF COUNTING MBMS
  UES IN IDLE MODE, 3RD GENERATION
  PARTNERSHIP PROJECT (3GPP), MOBILE
  COMPETENCE CENTRE ; 650, ROUTE DES
  LUCIOLES ; F-06921 SOPHIA-ANTIPOLIS
  CEDEX ; FRANCE, vol. RAN WG2, no. Madrid,
  Spain; 20100823, 16 August 2010 (2010-08-16),
  XP050451783, [retrieved on 2010-08-16]**

• ERICSSON ET AL: "Probability factor adaptation for MBMS counting", 3GPP DRAFT; R2-104778 PROBABILITY FACTOR ADAPTATION FOR MBMS COUNTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 16 August 2010 (2010-08-16), XP050451785, [retrieved on 2010-08-16]

**Description**

FIELD OF THE INVENTION

The present invention relates to methods and devices for estimating terminals' interest in services.

BACKGROUND

This invention relates to mobile communication and as an example refers to the currently discussed and developed Long-Term Evolution standard (LTE) which features, among others, a Multimedia Broadcast-Multicast Service (MBMS). Service of MBMS may comprise for example, audio, video, still images, or any other type of media or combined media types without limiting the applicability of the present invention.

In its previous release, i.e. LTE Rel-9, those standards include a basic MBMS functionality, of pure broadcast-mode MBMS transmission. This did not contain any uplink-feedback loop of any form.

The subsequent release, i.e. LTE Rel-10 MBMS WI (Work Items, WI) further specifies counting, to aid operator's decision-making on what services to broadcast. Insofar, Rel-10 WI contains some feedback in terms of counting results so as to aid operator's decision making on what services to broadcast. That is, in brief, responsive to a network-broadcast request, terminals (such as user equipments UEs) which are in a connected state in terms of radio resource control (RRC), i.e. in RRC_Connected mode, indicate if they are interested in receiving the services indicated in the counting request.

The fact that only terminals being in the RRC_Connected mode respond to such MBMS counting requests broadcast by the network, however, provides the network operator only with incomplete information. This is because MBMS reception is possible for a terminal UE just as well in another mode or state known as RRC_Idle. Thus, when the operator initiates that the network performs counting for a given MBMS service and receives from those terminals UE which are in RRC_Connected mode a number of indications of interest in the service, the operator is still left wondering how many terminals UE (which are not in RRC_Connected mode) which are in RRC_Idle mode are/were also interested in the MBMS service. Note that while MBMS service is used in singular here, it is understood that that plural services may be covered. In particular, attribute value pairs (AVPs) of the broadcast MBMS counting request may specify a single or plural services for which the interest of the terminals (or the respective users) is to be counted.

In the currently standardized framework, there are some ways for the operator to estimate the total interest in the service among the terminals and/or users. For instance, on a large scale, there is information in the network available of how many terminals UE which are in state RRC_Idle are present in each tracking area. (A tracking area generally denotes the area and/or one or more cells where, as opposed to the exact cell, a UE in RRC_Idle is known to reside). Similarly, there is information of how many terminals UE which are in state RRC_Connected are present in each tracking area or cell. These two pieces of information allow the network (operator) to estimate the proportion of all terminals UE that are in state RRC_Connected. By assuming that this same ratio applies also to terminals UE interested in or receiving an MBMS service, the total interest can be extrapolated from the responses received from only those terminals UE that are in the state of RRC_Connected.

However, the above assumption is likely not to be accurate. Given that a terminal UE is receiving, e.g. a mobile-TV service over MBMS, it seems less likely than otherwise that the terminal UE is at the same time engaged also in unicast activity.

A more "straightforward" approach to address the problem is to extend responding to counting requests also to terminals UE which are in state RRC_Idle. In discussions held in connection with 3GPP RAN2 (3rd Generation Partnership Project; Radio Access Network 2), this has been proposed by various contributors. Such a proposal, however, has at least some impacts that need proper consideration. To keep counting results reliable, responding terminals UE should be authenticated and identified. This serves mainly to prevent terminal implementations from trying to bias and/or influence the counting results in a manner so as to favor the services they are individually interested in, by responding with more than one indication of interest to a given counting request. This, in turn, tends to rule out that terminals in state RRC_Idle (when getting involved in counting procedures) remain in that state when responding to a counting request. Namely, in order to ensure proper authentication of responses to counting requests, the terminal UE would need to transit to state RRC_Connected, and security would need to be established by transactions with a Mobility Management Entity (MME).

Inviting, by a broadcasted MBMS counting request, an (a priori) unknown number of terminals UEs to initiate such procedures towards the core network poses the risk that such requests create an excessive instantaneous load on the network. UTRAN (UMTS Terrestrial Radio Access Network) MBMS addresses this issue with the concept of a probability factor. That is, an interested terminal UE should only respond to a request with such probability as signaled with the counting request. Stated in other words, the request prescribes to the interested terminal the probability of its response. Then, the network gradually ramps up this probability during the course of counting. However, fitting such a probability factor to the Enhanced UTRAN (E-UTRAN) framework is problematic because, at least up to now, the counting request is broadcast on the MBMS control channel MCCH which needs to be bit-identical across all cells part of the MBMS Single Frequency Network MBSFN.

Meanwhile, self organized networks (SON) as well as a concept of minimization of drive tests (MDT) in certain aspects resort to principles of logging and reporting for terminals UE. Hence, there is still a possibility to improve scenarios for counting the interest in a service or services among terminals present in a network.

3GPP STANDARD 3GPP TS 36.300, discloses the MBMS counting procedure in order to determine how many terminals are interested in a specific service. 3GPP DRAFT R2-103865 COUNTING FOR MBMS REL-10 from Ericsson and 3GPP DRAFT R2-104776 ON THE NEED OF COUNTING MBMS UES IN IDLE MODE from Ericsson disclose extensions of the counting procedure to idle modes terminals. 3GPP DRAFT R2-104778 PROBABILITY FACTOR ADAPTATION FOR MBMS COUNTING from Ericsson discloses a solution for providing the counting procedure to idle mode terminals, in which there are different probability factors for idle mode and connected mode terminals for limiting the uplink load due to MBMS counting activity.

## SUMMARY OF THE INVENTION

Therefore, it is an object of the present invention to propose improvements in scenarios for counting the interest in a service or services among terminals present in a network. According to a first aspect, the above object is for example accomplished by a device, comprising a transmitter module configured to send a configuration request adapted to request a terminal to configure a terminal's logging memory for subsequently storing at least information allowing to estimate the conditional probability that, at a random occurrence of counting interest in a service, given that the terminal is interested in the enquired service, the terminal is in a connected state.

According to further developments of the device

- the configuration request is further adapted to request a terminal to configure the terminal's logging memory for subsequently storing information proportional to the probability that at a random occurrence of counting interest in the service, the terminal is interested in the enquired service;
- the transmitter module is configured to send said request towards a network transceiver device for broadcasting, or to broadcast said request towards terminals.

According to another aspect, the above object is for example accomplished by a device, comprising a receiver module configured to receive information from at least one respective terminal's logging memory, wherein the information received comprise information allowing to estimate the conditional probability that, at a random occurrence of counting interest in a service, given that the terminal is interested in the enquired service, the terminal is in a connected state.

According to further developments of the device,

- the information received further comprises information proportional to the probability that at a random occurrence of counting interest in the service, the terminal is interested in the enquired service;
- the device further comprises a processor module configured to process the received information to calculate an estimate for the conditional probability that, while interested in the service, a random terminal is in a specific state.

According to another aspect, the above object is for example accomplished by a device, comprising a receiver module, a control module, and a memory module, wherein the receiver module is configured to receive a request for memory configuration, and to receive a request to indicate the device's interest in a service that is indicated in such request, the control module is configured to configure the memory module according to the configuration request, and to store at least information allowing to estimate the conditional probability that, at a random occurrence of counting interest in a service, given that the terminal is interested in the enquired service, the terminal is in a connected state.

According to further developments of the device,

- the control module is further configured to store information proportional to the probability that at a random occurrence of counting interest in the service, the terminal is interested in the enquired service;
- the device further comprises a transmitter module configured to transmit the information stored in the memory module; and, in regad to any of the above devices,
- the information allowing to estimate the conditional probability comprises an indication of the proportion of such occasions where the terminal was in a connected state, among all such occasions of the terminal having been enquired of service interest by the network, that were observed by the terminal while interested in the service;
- the information proportional to the probability comprises an indication of the average frequency of occurrence of such occasions of the terminal having been enquired of service interest by the network, that were observed by the terminal while interested in the service.

According to a still further aspect, the above object is for example accomplished by a method comprising sending a configuration request adapted to request a terminal to configure a terminal's logging memory for subsequently storing at least information allowing to estimate the conditional probability that, at a random occurrence of counting interest in a service, given that the terminal is interested in the enquired service, the terminal is in a connected state.

According to further developments of the method,

- the configuration request is further adapted to request a terminal to configure the terminal's logging memory for subsequently storing information proportional to the probability that at a random occurrence of counting interest in the service, the terminal is interested in the enquired service;
- the method further comprises sending said request towards a network transceiver device for broadcasting, or broadcasting said request towards terminals;

According to another aspect, the above object is for example accomplished by a method, comprising receiving information from at least one respective terminal's logging memory, wherein the information received comprise information allowing to estimate the conditional probability that, at a random occurrence of counting interest in a service, given that the terminal is interested in the enquired service, the terminal is in a connected state.

According to further developments of the method,

- the information received further comprises information proportional to the probability that at a random occurrence of counting interest in the service, the terminal is interested in the enquired service;
- the method further comprises processing the received information to calculate an estimate for the conditional probability that, while interested in the service, a random terminal is in a specific state.

According to another aspect, the above object is for example accomplished by a method, comprising receiving a request for memory configuration, and receiving a request to indicate the device's interest in a service that is indicated in such request, configuring a memory module according to the configuration request, and storing at least information allowing to estimate the conditional probability that, at a random occurrence of counting interest in a service, given that the terminal is interested in the enquired service, the terminal is in a connected state.

According to further developments of the method,

- the method further comprises storing information proportional to the probability that at a random occurrence of counting interest in the service, the terminal is interested in the enquired service;
- the method further comprises transmitting the information stored in the memory module; and, in regad to any of the above methods.
- the information allowing to estimate the conditional probability comprises an indication of the proportion of such occasions where the terminal was in a connected state, among all such occasions of the terminal having been enquired of service interest by the network, that were observed by the terminal while interested in the service;
- the information proportional to the probability comprises an indication of the average frequency of occurrence of such occasions of the terminal having been enquired of service interest by the network, that were observed by the terminal while interested in the service.

Accordingly, by virtue of the above aspects proposed by the present invention, scenarios for counting the interest in a service or services among terminals present in a network are presented. In particular, counting results obtained are meaningful and reliable while not overloading the network when counting.

## BRIEF DESCRIPTION OF THE DRAWINGS

The present invention will be more readily understood when referring to the accompanying drawings, in which

Fig. 1 shows an overview of network entities involved in interaction with terminals, for counting the interest in a service or services among terminals present in a network, and basics of their internal structure;

Fig. 2 is a flowchart illustrating method steps performed at a transceiver device eNB of the network;

Fig. 3 is a flowchart illustrating method steps performed at a terminal device UE; and

Fig. 4 is a flowchart illustrating method steps performed at a network device such as a multi-cell coordination entity MCE.

DETAILED DESCRIPTION

Prior to describing the individual drawings, the subsequent section will outline an overall description within the entities involved without particularly separating the description for individual entities. It is believed to be proper to obtain a general understanding of the functionalities conceived under the present invention.

A problem with the above prior concept discussed first resides in that the operator is unaware of the proportion of UEs in a specific state such as "RRC_Connected", among those UEs that are interested in a certain MBMS service (or alternatively, in any MBMS service), at the time of counting.

This proportion can also be interpreted as a probability. For a random terminal UE at a random occurrence of counting (i.e. receiving a request to indicate its interest, for the response to be counted) for an MBMS service, let

- I denote the event that the UE is interested in the MBMS service; and
- C denote the event that the UE is in that specific state "RRC_Connected".

Then the proportion of interest equals the conditional probability $Pr(C \mid I)$.

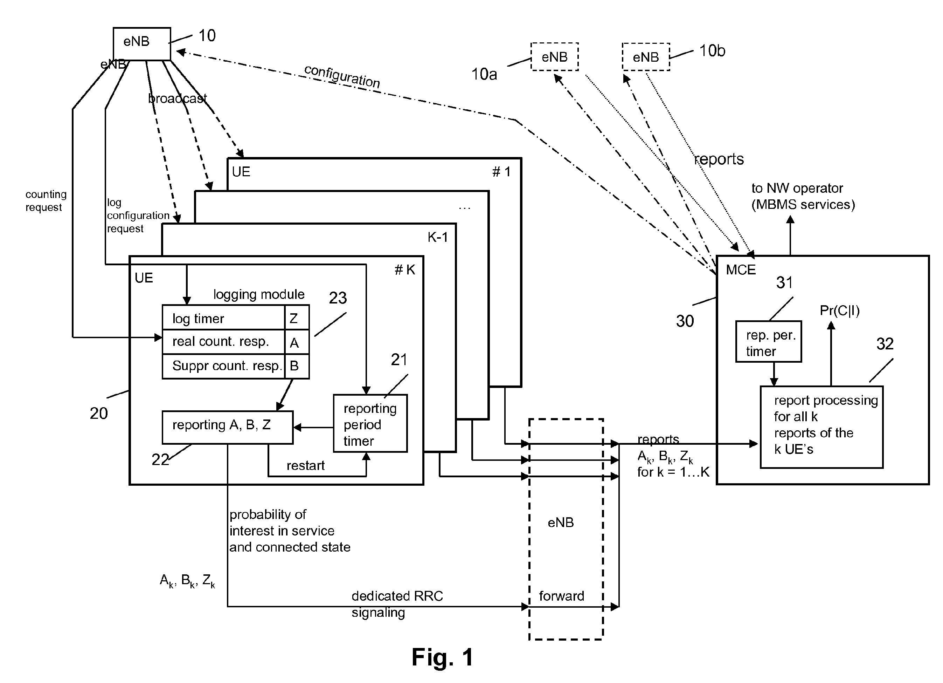

The present invention proposes that terminals, UEs, log and report to the network information that is assisting in estimating that probability, either separately per MBMS service or as aggregated for MBMS services in general. The network represented by a network entity such as an MCE (multi-cell coordination entity) then estimates the probability based on the aggregated UE-reported information, to assist the operator's decision-making. Note that an entity differing from the MCE may take over such role, if the functionality is assigned thereto. Thus, in the present application, MCE is used as a mere example only. Generally, such an entity MCE controls more than one transceiver devices such as an evolved Node_B, eNB, which is one reason for the name "multi-cell" coordination entity. Each eNB in turn controls cells containing terminals UEs. Although Fig.1 illustrates only a subset of the entire UE population of the network and illustrates this subset as residing in the cells controlled by a single eNB (denoted by 10 in Fig. 1), this is only chosen for illustrative purposes. Rather, the UE population consists of all UEs in cells within the MCE's domain, thus also in cells under control of eNB's exemplarily denoted in Fig. 1 by 10a and 10b, respectively. Also, it is assumed that the illustrated terminals $UE_k$ are MBMS capable and support the features described in this application. While, of course, incomaptible UEs may reside in a cell, those are not considered here.

Thus, in connection with the present invention, terminals are configured to keep log of their status at times of counting requests and those terminals UEs keep log of and report to the network the following:

    1. information allowing to estimate the conditional probability that, assuming/given that the UE is interested in an MBMS service, at a random occurrence of counting for that service, the UE is RRC_Connected, i.e. information allowing to estimate the UE-specific probability $Pr(C_k \mid I_k)$ for each $UE_k$. (assuming further that K such terminals UE that are capable of this reporting mechanism and have even occasional interest in an MBMS service, are present which are denoted by $UE_1, ..., UE_{k-1}, UE_K$)

This still poses the question, how are these estimates from different terminals $UE_k$ supposed to be weighted by the network entity in charge of the evaluation when estimating $Pr(C \mid I)$.

For sake of an example, assume there are two terminals UE1 and UE2, one (UE1) that is constantly receiving (or interested in) the MBMS service and always in RRC_Connected while at it (i.e. the above UE-specific probability $Pr(C_1 \mid I_1)=1$), and the other one (UE2) that has only once tried an MBMS service during its whole lifetime, having been RRC_Idle while at it, i.e. $Pr(C_2 \mid I_2)=0$. If the network entity would just average these two estimates to conclude $Pr(C|I)=½$, it would make quite an error, as the right value would be much closer to that of the UE always receiving MBMS.

Thus, as suggested in relation to the present invention, what also needs to be accounted for in such estimation is $Pr(I_k)$ of each reporting UE. To this end, there is developed the probability of interest further as

```
Pr(C | I) = Pr(I and C) / Pr(I)    (well-known identity)

       =(∑ₖ Pr(The UE is the k-th UE having reported its sta-
tistics) x Pr(Iₖ) x Pr(Cₖ | Iₖ))
       / (∑ₖ Pr(The UE is the k-th UE having reported its
statistics) x Pr(Iₖ))
```

The summation is taken over all K terminals (for k= 1...K) who have reported, and the first probability in each product is just the inverse of the number K of those UEs (hence 1/K, for all k's from 1 ...K).

So, the probability $Pr(C \mid I)$ is correctly estimated as an average of its UE-specific estimates $Pr(C_k \mid I_k)$, weighted by the UE-specific estimates for the probability that the UE is interested in the service at the time of counting. Consequently, UEs that are never interested in MBMS services, or are not even MBMS-capable, would have a zero-weight in this weighted average, and therefore need not be involved in this reporting scheme at all.

For this reason, in connection with the present invention it is also proposed that terminals UEs are configured to keep log of and report to the network the following:

2. information that is directly proportional to the probability that at a random occurrence of counting for an MBMS-service the UE is interested in the service.

Proportionality is enough, because any proportionality constant will cancel out in the last expression above, as also becomes apparent from a next section.

The preferred logged quantities are, in at least an exemplary embodiment:

A. The number of occurred counting instances for the MBMS service where the UE actually responded, i.e. the UE was interested in the service and was in a specific state of "RRC_Connected";
B. The number of occurred counting instances where the UE would have responded had it been RRC_Connected, i.e. the UE was interested in the service, but was not in the specific state but in another state, i.e. in "RRC_Idle"; and
Z. The time over which the previous quantities A, B have been logged.

Then, $A_k / (A_k + B_k)$ gives an estimate for $Pr(C_k \mid I_k)$ (and converges to it as the time Z tends to infinity). (Thus, A and B represent the (type of) information mentioned under item 1 above.)

Further, $(A_k+B_k)/Z_k$ gives the UE-specific average time-intensity (or frequency, as events per time are concerned) of such occurrences of counting for the service when the UE was interested in the service. This divided by the average time-intensity of any occurrences of counting for the service gives an estimate for $Pr(I_k)$; the network can keep track of the latter time-intensity, but in fact it does not need to because being common to all UEs i.e. independent of k, as the common denominator in all $Pr(I_k)$, that time-intensity will cancel out when computing the estimate for $Pr(C \mid I)$.

In at least one exemplary embodiment or implementation, the above-mentioned A, B, and Z are the preferred quantities for UEs to signal instead of the readily-computed estimates $A_k/(A_k+B_k)$ and $(A_k+B_k)/Z_k$, because with time especially the latter quotient may become problematically small to signal.

Thus, what a UE may signal is

- the individual information as such, i.e. data values indicating A, B, Z,
  or, in at least an alternative,
- the computed ratios which the UE may have calculated already, i.e. A/(A+B) and (A+B)/Z,
  or, in at least a further alternative,
- in a scenario in which Z is part of the configuration (e.g. laid down in a standard),

A and B are signaled only and used for computing at the receiving side in combination with the configured time Z (e.g. 1 day or 1 hour) also configured at the receiving side (i.e. MCE), i.e. A and B are scaled to correspond to the configured value Z at the receiving side, and, or the UE scales the sum (A+B) using the configured value Z when reporting (A+B)/Z.

Still further, in another scenario it may apply that there is no need for reporting the $(A_k+B_k)/Z_k$. A motivation for this would be that it is concluded that there is zero or weak correlation between a UE's Pr(I_k) and its Pr(C_k | I_k). Hence, the Pr(C_k | I_k) from different Ues can be simply averaged with equal weight for all, despite the different Pr(I_k) that Ues may have. In such scenario, it could be sufficient to report A, and B (or to calculate A/(A+B) to be reported).

Although hereinbefore the counters A and B were introduced to count real and suppressed count responses, respectively, in a modification representing another exemplary embodiment of the present invention, the count value B could simply be replaced by B* representing the sum of A and B discussed above. That is, a counter (A) would still be configured for counting the "real" responses of interest, while a counter B* would be configured to count any response of interest, i.e. whether real or suppressed (and insofar independent of the UE's connection state). Then the exemplarily given formulas above would read A/B* (instead of A/(A+B)), and B*/Z.

Other modifications would in such exemplary embodiment not be necessary. It is thus understood, that further modifications could be made without changing the inventive concept of the present invention.

Thus, there is (a logging/sending of) information proportional to the probability which comprises an indication of the average frequency of occurrence of such occasions of the terminal having been enquired of service interest by the network, that were observed by the terminal while interested in the service. This corresponds to e.g. the above (A+B)/Z or B*/Z.

Also, there is (a logging/sending of) information allowing to estimate the conditional probability which comprises an indication of the proportion of such occasions where the terminal was in a connected state, among all such occasions of the terminal having been enquired of service interest by the network, that were observed by the terminal while interested in the service. This corresponds to e.g. the above A/(A+B) or A/B*.

The reporting could in at least an exemplary embodiment be configured such that each terminal UE reports once per a configured period, e.g. every day, and only as a last resort should the terminal UE need to transit to RRC Connected state as a specific state only for the sake of this reporting. That is, only if a reporting timer equal to the reporting period (and restarted at each reporting) is about to expire and the UE has not been RRC Connected for other reasons. The UEs should not clear or erase the values of these reported quantities from the logging memory between reports, because the statistical accuracy of the corresponding estimates improves with time; the only reason forcing to clear the values from the logging memory is a wrap-around or overflow of the signalling-value range for one of these quantities.

The configuration of terminals (UE) for logging and reporting is preferentially done by broadcast RRC signalling (and the reporting by a dedicated RRC signalling), both from/to an evolved Node_B (eNB) as an example for a transceiver device. In case the present invention is applied to another standard, the name of the transceiver device may change, however, in the context of the present invention, the functionality would be preserved.

On the network side, it is suggested that the transceiver device such as an eNB just forwards all the reported quantities ($A_k$, $B_k$, and $Z_k$ in at least one scenario, or just $A_k$ and $B_k$ in another scenario if Z is configured in the system, or the ratios calculated from A, B, Z as described above in another scenario) from each of K ($1 <= k <= K$) terminals UE onwards to a network device such as a Multicell Coordination Entity MCE which, at the end of each reporting period e.g. when the date is about to change, performs the final estimation/calculation (only) from the fresh (most recently received) set of data. Previous data should not be utilized to avoid over-weighting of some UEs in the estimate. In case the present invention is applied to another standard, the name of the network device may change, however, in the context of the present invention, the functionality would be preserved.

The UE capability for such logging and reporting could be coupled to that of responding to counting, i.e. terminals that respond to counting (for which there is a natural incentive) should also support this functionality.

The above reporting has been described based on a periodic reporting approach in which the reported data do not identify the reporting terminal (in such scenarion, the MCE regularly clears previously reported data). Nevertheless, an at least another exemplary embodiment, event-based reporting could be adopted. A terminal UE reports A, B, Z, (or the ratios aleady calculated therefrom), upon occurrence of a predetermined event such as becoming "RRC_connected". In such scenario, the UE identity would be associated to the data so that the MCE as the receiving side is enabled to discard the UE's previously reported data, thereby avoiding individual UEs becoming overrepresented in the network's probability estimation.

As has already been outlined above in a system/method overview, the present invention provides for an approach for a network operator to estimate the interest of terminals in MBMS services even when those terminals are in RRC_Idle state. This represents an alternative to the option of counting directly also UEs in RRC_Idle that seems to come with a number of issues, such as frequent state transitions from "idle" to "connected" every time a counting request is received and to be answered.

While, however, the present invention has hereinbefore been described in a system/method overview style, herein below a description of the individual devices and methods performed by them will be given in a greater detail. Note that all modifications described above are also valid/possible for the subsequent description of devices/methods even in case the subsequent description should address only a specific exemplary embodiment.

Figure 1 shows an overview of network entities involved in interaction with terminals such as user equipments UE (denoted by 20), for counting the interest in a service or services among terminals present in a network. Basics of their respective internal structure are indicated. In this regard, it is noted, however, that basic modules such as a receiving module, a control module, a memory module at a user equipment side or a receiver module and a processor module at a network entity's side such as a multicell coordination entity MCE (denoted by 30), and likewise a transmitter and/or receiver module at a network transceiver device such as an evolved Node_B, eNB, (denoted by 10) are not shown to keep the drawings simple.

With reference to Figure 1, there is illustrated an exemplary device 10 such as an evolved Node_B eNB, one exemplary multi-cell coordination entity MCE 30 as a network device, and a plurality of terminals 20 such as user equipment devices UE. It is assumed, as explained herein before, that K such user equipments (1 <= k <= K) that are capable of this reporting mechanism and have even occasional interest in an MBMS service, are present.

Generally, as mentioned above, such an entity MCE 30 controls more than one transceiver devices such as an evolved Node_B, eNB, which is one reason to for the name "multi-cell" coordination entity. Each eNB 10, 10a, 10b, in turn controls cells containing terminals UEs 20. Although Fig.1 illustrates only a subset of K of the entire UE population of the network and illustrates this as residing in the cells controlled by a single eNB (denoted by 10), this is only chosen for illustrative purposes. Rather, the UE population consists of all UEs in cells within the MCE's 30 domain, thus also in cells under control of eNB's exemplarily denoted by 10a and 10b, respectively.

The eNB 10 is configured to broadcast at request from the MCE, from its transmitter module, a broadcast request towards the terminal devices so as to request terminals in state RRC_Connected to respond with an indication, if the respective terminal is interested in a service that is indicated in said request. This is indicated in Figure 1 by the arrow labeled "counting request". The respective responses from the individual user equipments are counted via the eNB 10 at a network device 30 such as the MCE. Further, the transmitter module at the eNB 10 is further configured to broadcast a request towards the terminal devices so as to request terminals to configure a respective terminal's 20 logging memory 23 for subsequently storing, while measuring the time Z (of logging) a respective count value A, B for the terminal's interest in said service or services per state of the terminal.

Likewise, as shown in Figure 1 in connection with the dotted line surrounding an eNB, an eNB is configured as comprising a receiver module, which receives the data from terminals' logging memories upon reporting and wherein the transmitter module of the eNB forwards those data to another device. In Figure 1, the eNB surrounded by a dotted line is assumed to be the same eNB that transmits the broadcast requests. Only for simplicity of drawings, the signaling for the reporting is graphically represented at a distinct position in the drawing. While the broadcast requests rely on the broadcast radio resource control RRC signaling, the reporting of logged data takes place via a dedicated RRC signaling channel from a user equipment towards the eNB. The reports received from user equipments 20 by the eNB 10 are then forwarded towards the network device 30 such as the MCE. This is illustrated by indicating that K reports for k = 1... to K user equipments UE, each report comprising in the exemplary example illustrated the data $A_k$, $B_k$, $Z_k$ are supplied to the MCE. The MCE 30 receives those data at its receiver module that is configured to receive the data from terminals' logging memories. Furthermore, the MCE device 30 comprises a processor module 32 configured to process the received data so as to calculate the probability for a random terminal, while being interested in the service, to be in a specific state. The processing is exemplarily based on the above-outlined formulas and insofar, the processor module 32 is configured to calculate the probability as the weighted average of the terminal-specific probabilities of the individual terminal, while being interested in the service, being in the specific state, weighted by the terminal-specific probabilities of the individual terminal to be interested in the service at a time of the network enquiring terminals' interest. In the present context, the specific state is a connected state of the terminal, i.e. the RRC_Connected state, while the other state refers to the RRC_Idle state. In this regard, the probability for a respective individual terminal, while being interested in the service, to be in the specific state (connected state) is represented by the number of actual indications of interest of the terminal while being in the specific state (A) divided by the sum of a number of actual indications of interest of the terminal while being in the specific state (A) and a number (B) of indications of interest of the terminal not sent only because of not being in the specific state. Hence, B is indicative of suppressed counting responses.

Moreover, the probability of the individual terminal being interested in the service at a time of the network enquiring terminals' interest is represented by a sum of the number of actual indications of interest (A) of the terminal while being in the specific state (connected) and the number (B) of suppressed indications of interest of the terminal not sent only because of not being in that specific state , divided by the time (Z) over which these numbers were recorded. The report processing for all the reports is based on the current and/or fresh data sets, e.g. when the date is about to change if for example the reporting period was set to a day. Generally, the processor will process the reports with the elapse of the reporting period timer 31. The reporting period timer 31 may be preconfigured for the MCE as shown in this example. However, in at least another exemplary embodiment, also the MCE could receive a signal from the eNB containing the logging configuration request which also contains as an attribute the reporting period according to which the corresponding timer could be configured. Moreover, as an option, the MCE could set the reporting period when centrally configuring the reporting and inform the eNB to place this reporting period parameter in the logging configuration request to be broadcasted to the terminals. The entire logging configuration request could even be sent from the MCE to the eNBs, from where it is then broadcasted to the UEs.

As regards each of the individual user equipments 20, a user equipment 20 with the index K is described. Other user equipments having a number or index smaller than K, i.e. K-1, ... k,..., 1 are identical to the one described and illustrated in more detail. The user equipment or terminal device 20 comprises a receiving module, a control module, and a memory module. While the receiving module and control module are not separately illustrated in the drawing, the memory module is schematically illustrated and denoted by 23. The terminal device's receiving module (not shown) is configured to receive a request for memory configuration (from a transceiver device 10 such as an evolved Node_B) and likewise, to receive a request to indicate the device's interest in a service or services that is or are indicated in such request (counting request broadcast from the eNB). The control module (not shown) is configured to configure the memory module 23 according to the information contained in the configuration request. That is, the memory module may consist of or comprise a partition of a so-called logging module 23. The logging module 23 represents a memory partition that is configured to store responses to counting requests as real counting request responses (A) or suppressed counting request responses (B) as well as to keep track of the log time (Z). In this regard, the partition and/or number A of the logging module keeps track of the number of actual indications of interest of the terminal while being in the specific state, while the partition or number B of the logging module keeps track of the number of suppressed indications of interest of the terminal not sent only because of not being in the specific state (i.e. being in state RRC_idle rather than in state RRC_connected as connection states of the UE). Furthermore, the partition/data Z keeps track of the time over which the logging is performed. Thus, the memory module is configured according to the configuration request and the control module is configured to increment a respective counter A, B provided for in said configured memory module so as to log the device's interest in a service that is indicated in said request, for a respective state of the device. A counter (A, B) is provided per state (connected, idle) and also, the logging module keeps track and counts the time Z elapsed while logging the device's interest in the service.

Furthermore, the logging configuration request comprises a reporting period indication which is used to configure a corresponding reporting period timer 21 provided for in the user equipment 20. The control module is thus configured to start such reporting period timer 21 according to the configuration request. Further, the transmission module 22 is configured to report the counter values A, B and the time Z elapsed while logging before the reporting period ends. Once a report is transmitted by the transmission module, the reporting period timer is restarted. Further, the control module is configured, to switch, at the expiry of the reporting period, the device to a specific state (RRC_Connected) so as to force the transmission module to transmit the report in the connected date (because in RRC_Idle state, no reporting or transmission is actually possible). On the other hand, the control module is configured to instruct the transmission module to transmit the report if the device is (already or still) in the specific state when the reporting period is nearing expiry (if e.g. more than 75% or 80% or 90% of the reporting period have already expired, or if only a fixed period of time remains before expiry).

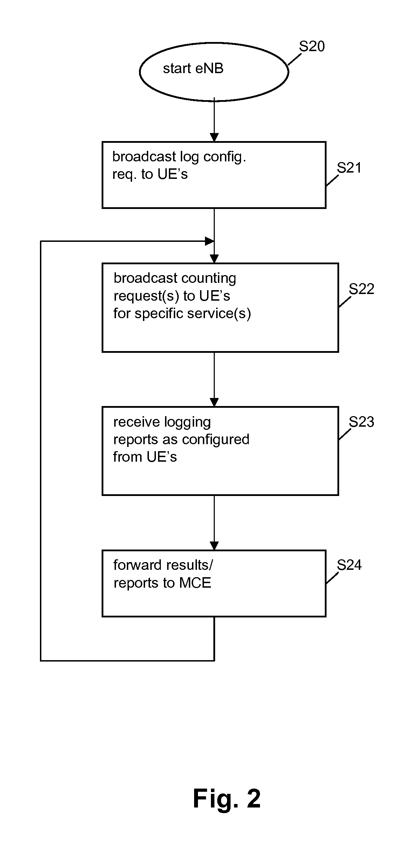

Figure 2 is a flowchart illustrating method steps performed at a transceiver device eNB of the network. In Figure 2, the eNB procedure starts at a step S20. In a step S21, the logging configuration request is broadcasted to the user equipment. (This broadcasting may be initiated based on a network operators or network entities trigger). The procedure continues in a step S22 with broadcasting the counting request(s) to the user equipment for specific service(s). Note that this step may comprise plural requests broadcasted at different points of time as configured in the eNB or in the network or as instructed by the network operator. Again, such counting requests as requests to indicate the respective terminals' interest in a service that is indicated in said request are triggered based on the network operator and/or network entities' settings. Although "service" is mainly used in singular form, such counting request may indicate plural services. If so, corresponding responses of the terminal devices will comprise a response/indication of interest per service. Then, at some points of time logging reports (as configured) are received from the user equipments in a step S23. In a step S24, the results/reports are forwarded from/via the eNB to the MCE as a network device. After that, the flow returns to step S22.

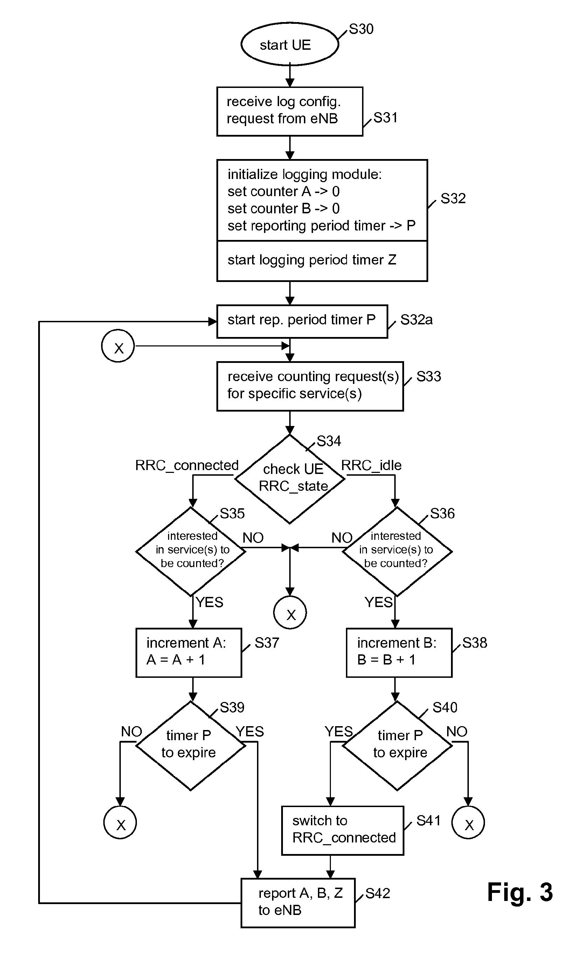

Figure 3 is a flowchart illustrating method steps performed at a terminal device UE. The process starts in a step S30. In a step S31, the receiver module of the user equipment UE receives a logging configuration request broadcasted by an eNB. In a following step S32, the logging module (as a memory or as a partition of a memory) of the UE is initialized by setting the counters A and B to zero and a reporting period timer P according to the configuration request. Furthermore, the logging period timer Z is started for counting the time over which logging is performed. In a next step S32a the reporting period timer is started. Although steps S32 and S32a are illustrated as distinct steps, it is to be noted that practically, the logging period timer and the reporting period timer can at this stage upon initialization be assumed to be started simultaneously.

After that, in a step S33, the receiver module of the terminal UE receives counting request(s) for counting or logging the user equipments interest in specific service(s) broadcasted by an eNB.

In a subsequent step S34, the UE's state is checked, i.e. whether the UE is in a RRC_state as a specific state or not (i.e. in RRC_idle state) is checked. If the UE is in RRC_state "RRC_connected" as the specific state, the flow advances to step S35. If the UE is in RRC_state "RRC_idle", the flow advances to step S36.

In step S35 it is decided on the interest in service(s) to be counted. If in step S35 the interest is decided to be present (YES), the flow advances to step S37. If in step S35 no interest is decided to be present (NO), the flow returns to step S33 and subsequent counting request(s) is(are) awaited.

In step S37 the counter variable A is increased by 1. In the following step S39 it is checked, whether the timer P is to expire. If the timer is not yet to expire (NO), the flow returns to step S33. If the timer is to expire (YES), the flow advances to step S42.

In step S42, the transmitter module reports the counter values A and B and the logging period timer value Z to the eNB. After that, the flow returns to step S32a in which the reporting period timer is (re-)started.

With regard to step S36, which is processed in case the terminal UE is in RRC_idle state, in step S36 it is then also decided on the interest in service(s) to be counted. If in step S36 the interest is decided to be present (YES), the flow advances to step S38. If in step S36 no interest is decided to be present (NO), the flow returns to step S33 and subsequent counting request(s) is (are) awaited.

In step S38, the counter variable B is increased by 1. In a following step S40, it is checked whether the reporting period timer P is to expire. If the timer P is not yet to expire (NO), the flow returns to step S33 and subsequent counting request(s) is (are) awaited.

If, however, the timer is to expire (YES), the flow advances to step S41. In step S41, the RRC_state of the UE is forcedly switched to the specific state of "RRC_connected". Thereafter, the flow advances to step S42, and the transmitter module reports the counter values A and B and the logging period timer value Z to the eNB. After that, the flow returns to step S32a in which the reporting period timer is (re-)started.

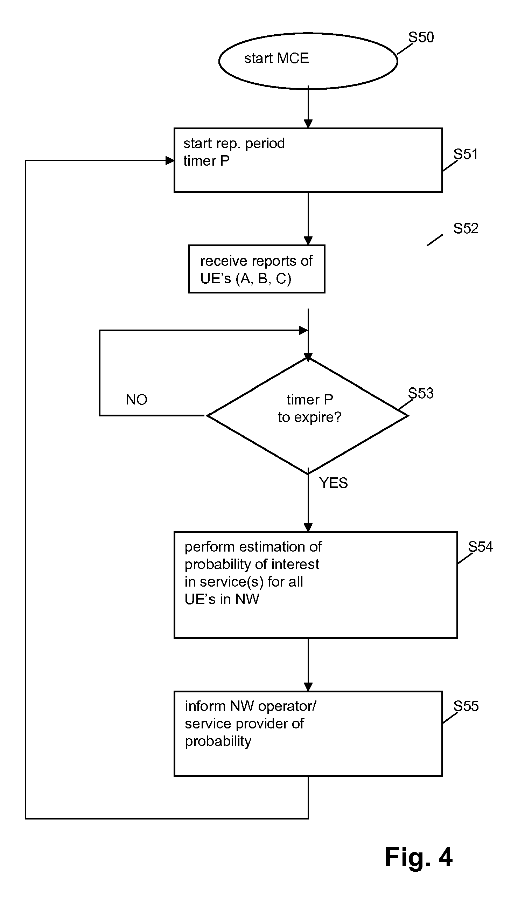

Figure 4 is a flowchart illustrating method steps performed at a network device such as a multicell coordination entity MCE. In Figure 4, the MCE procedure starts at a step S50. In step S51, the reporting period timer P is started (with expiry value equal to the timer at the UE's, e.g. based on a value configured at the MCE and signaled to the UEs via eNBs). The procedure continues in step S52 with receiving reports of the user equipment or equipments (A, B, Z). Then, whether the timer P is to expire is checked in a subsequent step S53. If the timer period P does not expire (NO in step S53), the procedure goes back to step S52. In case the timer period P is expired (YES in step S53), the procedure continues in step S54, where estimation of conditional probability of UEs being in RRC_Connected state given interest in service(s), for user equipments in the network is performed. In a step S55, the NW operator/service provider is informed of probability, and reports of the user equipment or equipments from the past reporting period are deleted. After that, the flow returns to step S51 in which the reporting period timer is (re-)started.

Hereinbefore, the present invention has been described with reference to exemplary embodiments. It is to be noted that many variations are possible without departing from the spirit and scope of the invention as laid down in the appended claims. In particular, the implementation can be accomplished in hardware or software or a mixture thereof and also independent on specific hardware or software as long as the respective functionality is preserved.

The present invention proposes a device comprising a receiver module configured to receive data from a respective terminal's logging memory, and a processor module configured to process the received data to calculate the probability for a random terminal, while being interested in the service, to be in a specific state. Also, the present invention proposes correspondingly configured terminals, together with respective methods.

**Claims**

1. A device, comprising:

    a transmitter module configured to

        send a configuration request adapted to

            request a terminal to configure a terminal's logging memory for subsequently storing at least information allowing to estimate the conditional probability that, at a random occurrence of counting interest in a service, given that the terminal is interested in the enquired service, the terminal is in a connected state.

2. A device according to claim 1, wherein the configuration request is further adapted to request a terminal to configure the terminal's logging memory for subsequently storing information proportional to the probability that at a random occurrence of counting interest in the service, the terminal is interested in the enquired service, wherein the information proportional to the probability optionally comprises

    an indication of the average frequency of occurrence of such occasions of the terminal having been enquired of service interest by the network, that were observed by the terminal while interested in the service.

**3.** A device according to claim 1, wherein
the transmitter module is configured

to send said request towards a network transceiver device for broadcasting, or
to broadcast said request towards terminals.

**4.** A device, comprising:

a receiver module configured to receive information from at least one respective terminal's logging memory,
wherein the information received comprise
information allowing to estimate the conditional probability that, at a random occurrence of counting interest in
a service, given that the terminal is interested in the enquired service, the terminal is in a connected state.

**5.** A device according to claim 4, wherein the information received further comprises
information proportional to the probability that at a random occurrence of counting interest in the service, the terminal
is interested in the enquired service, wherein the information proportional to the probability optionally comprises

an indication of the average frequency of occurrence of such occasions of the terminal having been enquired
of service interest by the network, that were observed by the terminal while interested in the service.

**6.** A device according to claim 4, further comprising
a processor module configured to process the received information to calculate an estimate for the conditional
probability that, while interested in the service, a random terminal is in a specific state.

**7.** A device, comprising a receiver module, a control module, and a memory module, wherein
the receiver module is configured

to receive a request for memory configuration, and
to receive a request to indicate the device's interest in a service that is indicated in such request,

the control module is configured

to configure the memory module according to the configuration request, and to store at least
information allowing to estimate the conditional probability that, at a random occurrence of counting interest in
a service, given that the terminal is interested in the enquired service, the terminal is in a connected state.

**8.** A device according to claim 7, wherein the control module is further configured to store
information proportional to the probability that at a random occurrence of counting interest in the service, the terminal
is interested in the enquired service, wherein the information proportional to the probability optionally comprises

an indication of the average frequency of occurrence of such occasions of the terminal having been enquired
of service interest by the network, that were observed by the terminal while interested in the service.

**9.** A device according to claim 7 or 8, further comprising a transmitter module configured to transmit the information
stored in the memory module.

**10.** A device according to claim 1, 4 or 7, wherein
the information allowing to estimate the conditional probability comprises

an indication of the proportion of such occasions where the terminal was in a connected state, among all such
occasions of the terminal having been enquired of service interest by the network, that were observed by the
terminal while interested in the service.

**11.** A method, comprising:

sending a configuration request adapted to request a terminal to configure a terminal's logging memory for
subsequently storing at least
information allowing to estimate the conditional probability that, at a random occurrence of counting interest in a service, given that the terminal is interested in the enquired service, the terminal is in a connected state.

12. A method according to claim 11, wherein the configuration request is further adapted to request a terminal to configure the terminal's logging memory for subsequently storing
information proportional to the probability that at a random occurrence of counting interest in the service, the terminal is interested in the enquired service, wherein the information proportional to the probability optionally comprises

  an indication of the average frequency of occurrence of such occasions of the terminal having been enquired of service interest by the network, that were observed by the terminal while interested in the service.

13. A method according to claim 11, further comprising
sending said request towards a network transceiver device for broadcasting, or
broadcasting said request towards terminals.

14. A method, comprising:

  receiving information from at least one respective terminal's logging memory, wherein the information received comprise
information allowing to estimate the conditional probability that, at a random occurrence of counting interest in a service, given that the terminal is interested in the enquired service, the terminal is in a connected state.

15. A method according to claim 14, wherein the information received further comprises
information proportional to the probability that at a random occurrence of counting interest in the service, the terminal is interested in the enquired service, wherein the information proportional to the probability optionally comprises

  an indication of the average frequency of occurrence of such occasions of the terminal having been enquired of service interest by the network, that were observed by the terminal while interested in the service.

16. A method according to claim 14, further comprising
processing the received information to calculate an estimate for the conditional probability that, while interested in the service, a random terminal is in a specific state.

17. A method, comprising
receiving a request for memory configuration, and
receiving a request to indicate the device's interest in a service that is indicated in such request,
configuring a memory module according to the configuration request, and
storing at least
information allowing to estimate the conditional probability that, at a random occurrence of counting interest in a service, given that the terminal is interested in the enquired service, the terminal is in a connected state.

18. A method according to claim 17, further comprising
storing information proportional to the probability that at a random occurrence of counting interest in the service, the terminal is interested in the enquired service, wherein the information proportional to the probability optionally comprises

  an indication of the average frequency of occurrence of such occasions of the terminal having been enquired of service interest by the network, that were observed by the terminal while interested in the service.

19. A method according to claim 17 or 18, further comprising transmitting the information stored in the memory module.

20. A method according to claim 11, 14 or 17, wherein
the information allowing to estimate the conditional probability comprises

  an indication of the proportion of such occasions where the terminal was in a connected state, among all such occasions of the terminal having been enquired of service interest by the network, that were observed by the terminal while interested in the service.

**Patentansprüche**

1. Vorrichtung, die Folgendes umfasst:

   ein Sendermodul, das ausgelegt ist zum

   Senden einer Konfigurationsanfrage, die ausgelegt ist zum Anfragen bei einem Endgerät, einen Logspeicher des Endgeräts zum nachfolgenden Speichern von mindestens

   Informationen zu konfigurieren, die es ermöglichen, die bedingte Wahrscheinlichkeit zu schätzen,

   dass sich das Endgerät, bei einem zufälligen Auftreten des Zählens von Interesse an einem Dienst, vorausgesetzt, dass das Endgerät an dem angefragten Dienst interessiert ist, in einem verbundenen Zustand befindet.

2. Vorrichtung nach Anspruch 1, wobei die Konfigurationsanfrage ferner dafür ausgelegt ist, bei einem Endgerät anzufragen, den Logspeicher des Endgeräts zum nachfolgenden Speichern von
   Informationen zu konfigurieren, die proportional zu der Wahrscheinlichkeit sind, dass das Endgerät bei einem zufälligen Auftreten des Zählens von Interesse an dem Dienst an dem angefragten Dienst interessiert ist, wobei die
   Informationen, die proportional zu der Wahrscheinlichkeit sind, optional
   eine Angabe der mittleren Auftretensfrequenz derartiger Gelegenheiten an dem Endgerät umfassen, das vom Netz nach einem Serviceinteresse angefragt worden ist, die von dem Endgerät beobachtet wurden, als es an dem Dienst interessiert war.

3. Vorrichtung nach Anspruch 1, wobei
   das Sendermodul ausgelegt ist zum
   Senden der Anfrage an eine Netz-Transceivervorrichtung zum Rundfunken, oder Rundfunken der Anfrage an Endgeräte.

4. Vorrichtung, die Folgendes umfasst:

   ein Empfängermodul, das dafür ausgelegt ist, Informationen von mindestens einem entsprechenden Logspeicher eines Endgeräts zu empfangen, wobei die empfangenen Informationen

   Informationen umfassen, die es ermöglichen, die bedingte Wahrscheinlichkeit zu schätzen, dass sich das Endgerät, bei einem zufälligen Auftreten des Zählens von Interesse an einem Dienst, vorausgesetzt, dass das Endgerät an dem angefragten Dienst interessiert ist, in einem verbundenen Zustand befindet.

5. Vorrichtung nach Anspruch 4, wobei die empfangenen Informationen ferner
   Informationen umfassen, die proportional zu der Wahrscheinlichkeit sind, dass das Endgerät bei einem zufälligen Auftreten des Zählens von Interesse an dem Dienst an dem angefragten Dienst interessiert ist, wobei die Informationen, die proportional zu der Wahrscheinlichkeit sind, optional
   eine Angabe der mittleren Auftretensfrequenz derartiger Gelegenheiten an dem Endgerät umfassen, das vom Netz nach einem Serviceinteresse angefragt worden ist, die von dem Endgerät beobachtet wurden, als es an dem Dienst interessiert war.

6. Vorrichtung nach Anspruch 4, ferner umfassend
   ein Prozessormodul, das dafür ausgelegt ist, die empfangenen Informationen zu verarbeiten, um eine Schätzung für die bedingte Wahrscheinlichkeit zu berechnen, dass sich ein zufälliges Endgerät in einem bestimmten Zustand befindet, während es an dem Dienst interessiert ist.

7. Vorrichtung, die ein Empfängermodul, ein Steuermodul und eine Speichermodul umfasst, wobei
   das Empfängermodul ausgelegt ist zum

   Empfangen einer Anfrage nach einer Speicherkonfiguration, und
   Empfangen einer Anfrage, das Interesse der Vorrichtung an einem Dienst, der in einer derartigen Anfrage angegeben ist, anzugeben,

das Steuermodul ausgelegt ist zum

Konfigurieren des Speichermoduls gemäß der Konfigurationsanfrage, und mindestens zum Speichern von Informationen, die es ermöglichen, die bedingte Wahrscheinlichkeit zu schätzen, dass sich das Endgerät, bei einem zufälligen Auftreten des Zählens von Interesse an einem Dienst, vorausgesetzt, dass das Endgerät an dem angefragten Dienst interessiert ist, in einem verbundenen Zustand befindet.

8. Vorrichtung nach Anspruch 7, wobei das Steuermodul ferner ausgelegt ist zum Speichern von Informationen, die proportional zu der Wahrscheinlichkeit sind, dass das Endgerät bei einem zufälligen Auftreten des Zählens von Interesse an dem Dienst an dem angefragten Dienst interessiert ist, wobei die Informationen, die proportional zu der Wahrscheinlichkeit sind, optional eine Angabe der mittleren Auftretensfrequenz derartiger Gelegenheiten an dem Endgerät umfassen, das vom Netz nach einem Serviceinteresse angefragt worden ist, die von dem Endgerät beobachtet wurden, als es an dem Dienst interessiert war.

9. Vorrichtung nach Anspruch 7 oder 8, die ferner ein Sendermodul umfasst, das dafür ausgelegt ist, die in dem Speichermodul gespeicherten Informationen zu senden.

10. Vorrichtung nach Anspruch 1, 4 oder 7, wobei die Informationen, die es ermöglichen, die bedingte Wahrscheinlichkeit zu schätzen,

eine Angabe des Anteils derartiger Gelegenheiten umfassen, während denen das Endgerät in einem verbundenen Zustand war, unter allen derartigen Gelegenheiten, an dem Endgerät, das vom Netz nach einem Serviceinteresse angefragt worden ist, die von dem Endgerät beobachtet wurden, als es an dem Dienst interessiert war.

11. Verfahren, das Folgendes umfasst:

Senden einer Konfigurationsanfrage, die ausgelegt ist bei einem Endgerät anzufragen, einen Logspeicher des Endgeräts zum nachfolgenden Speichern von mindestens Informationen zu konfigurieren, die es ermöglichen, die bedingte Wahrscheinlichkeit zu schätzen, dass sich das Endgerät, bei einem zufälligen Auftreten des Zählens von Interesse an einem Dienst, vorausgesetzt, dass das Endgerät an dem angefragten Dienst interessiert ist, in einem verbundenen Zustand befindet.

12. Verfahren nach Anspruch 11, wobei die Konfigurationsanfrage ferner dafür ausgelegt ist, bei einem Endgerät anzufragen, den Logspeicher des Endgeräts zum nachfolgenden Speichern von Informationen zu konfigurieren, die proportional zu der Wahrscheinlichkeit sind, dass das Endgerät bei einem zufälligen Auftreten des Zählens von Interesse an dem Dienst an dem angefragten Dienst interessiert ist, wobei die Informationen, die proportional zu der Wahrscheinlichkeit sind, optional

eine Angabe der mittleren Auftretensfrequenz derartiger Gelegenheiten an dem Endgerät umfassen, das vom Netz nach einem Serviceinteresse angefragt worden ist, die von dem Endgerät beobachtet wurden, als es an dem Dienst interessiert war.

13. Verfahren nach Anspruch 11, ferner umfassend das Senden der Anfrage an eine Netz-Transceivervorrichtung zum Rundfunken, oder Rundfunken der Anfrage an Endgeräte.

14. Verfahren, das Folgendes umfasst:

Empfangen von Informationen von mindestens einem entsprechenden Logspeicher eines Endgeräts, wobei die empfangenen Informationen

Informationen umfassen, die es ermöglichen, die bedingte Wahrscheinlichkeit zu schätzen, dass sich das Endgerät, bei einem zufälligen Auftreten des Zählens von Interesse an einem Dienst, vorausgesetzt, dass das Endgerät an dem angefragten Dienst interessiert ist, in einem verbundenen Zustand befindet.

15. Verfahren nach Anspruch 14, wobei die empfangenen Informationen ferner

Informationen umfassen, die proportional zu der Wahrscheinlichkeit sind, dass das Endgerät bei einem zufälligen Auftreten des Zählens von Interesse an dem Dienst an dem angefragten Dienst interessiert ist, wobei die Informationen, die proportional zu der Wahrscheinlichkeit sind, optional eine Angabe der mittleren Auftretensfrequenz derartiger Gelegenheiten an dem Endgerät umfassen, das vom Netz nach einem Serviceinteresse angefragt worden ist, die von dem Endgerät beobachtet wurden, als es an dem Dienst interessiert war.

**16.** Verfahren nach Anspruch 14, ferner umfassend das
Verarbeiten der empfangenen Informationen, um eine Schätzung für die bedingte Wahrscheinlichkeit zu berechnen, dass sich ein zufälliges Endgerät in einem bestimmten Zustand befindet, während es an dem Dienst interessiert ist.

**17.** Verfahren, umfassend
das Empfangen einer Anfrage nach einer Speicherkonfiguration, und
das Empfangen einer Anfrage, das Interesse der Vorrichtung an einem Dienst, der in einer derartigen Anfrage angegeben ist, anzugeben,
das Konfigurieren des Speichermoduls gemäß der Konfigurationsanfrage, und
das Speichern von mindestens
Informationen, die es ermöglichen, die bedingte Wahrscheinlichkeit zu schätzen, dass sich das Endgerät, bei einem zufälligen Auftreten des Zählens von Interesse an einem Dienst, vorausgesetzt, dass das Endgerät an dem angefragten Dienst interessiert ist, in einem verbundenen Zustand befindet.

**18.** Verfahren nach Anspruch 17, ferner umfassend
das Speichern von Informationen, die proportional zu der Wahrscheinlichkeit sind, dass das Endgerät bei einem zufälligen Auftreten des Zählens von Interesse an dem Dienst an dem angefragten Dienst interessiert ist, wobei die Informationen, die proportional zu der Wahrscheinlichkeit sind, optional eine Angabe der mittleren Auftretensfrequenz derartiger Gelegenheiten an dem Endgerät umfassen, das vom Netz nach einem Serviceinteresse angefragt worden ist, die von dem Endgerät beobachtet wurden, als es an dem Dienst interessiert war.

**19.** Verfahren nach Anspruch 17 oder 18, das ferner das Senden der in dem Speichermodul gespeicherten Informationen umfasst.

**20.** Verfahren nach Anspruch 11, 14 oder 17, wobei
die Informationen, die es ermöglichen, die bedingte Wahrscheinlichkeit zu schätzen,

eine Angabe des Anteils derartiger Gelegenheiten umfassen, während denen das Endgerät in einem verbundenen Zustand war, unter allen derartigen Gelegenheiten, an dem Endgerät, das vom Netz nach einem Serviceinteresse angefragt worden ist, die von dem Endgerät beobachtet wurden, als es an dem Dienst interessiert war.

**Revendications**

**1.** Dispositif, comprenant :

un module d'émetteur configuré pour

envoyer une demande de configuration adaptée à

demander à un terminal de configurer une mémoire de journalisation de terminal pour ensuite stocker au moins
une information permettant d'estimer la probabilité conditionnelle que, à une occurrence aléatoire de comptage d'intérêt pour un service, étant donné que le terminal est intéressé par le service demandé, le terminal est dans un état connecté.

**2.** Dispositif selon la revendication 1, dans lequel la demande de configuration est en outre adaptée à demander à un terminal de configurer la mémoire de journalisation du terminal pour ensuite stocker
une information proportionnelle à la probabilité que, à une occurrence aléatoire de comptage d'intérêt pour le service, le terminal est intéressé par le service demandé, dans lequel l'information proportionnelle à la probabilité comprend facultativement

une indication de la fréquence moyenne d'occurrence d'occasions telles que le terminal ayant fait l'objet d'une demande d'intérêt pour un service par le réseau qui ont été observées par le terminal alors qu'il était intéressé par le service.

3. Dispositif selon la revendication 1, dans lequel
le module d'émetteur est configuré

pour envoyer ladite demande vers un dispositif d'émetteur-récepteur de réseau pour diffusion, ou
pour diffuser ladite demande vers des terminaux.

4. Dispositif, comprenant :

un module de récepteur configuré pour recevoir une information d'au moins une mémoire de journalisation de terminal respectif, dans lequel l'information reçue comprend
une information permettant d'estimer la probabilité conditionnelle que, à une occurrence aléatoire de comptage d'intérêt pour un service, étant donné que le terminal est intéressé par le service demandé, le terminal est dans un état connecté.

5. Dispositif selon la revendication 4, dans lequel l'information reçue comprend en outre
une information proportionnelle à la probabilité que, à une occurrence aléatoire de comptage d'intérêt pour le service, le terminal est intéressé par le service demandé, dans lequel l'information proportionnelle à la probabilité comprend facultativement

une indication de la fréquence moyenne d'occurrence d'occasions telles que le terminal ayant fait l'objet d'une demande d'intérêt pour un service par le réseau qui ont été observées par le terminal alors qu'il était intéressé par le service.

6. Dispositif selon la revendication 4, comprenant en outre
un module de processeur configuré pour traiter l'information reçue pour calculer une estimation pour la probabilité conditionnelle que, tout en étant intéressé par le service, un terminal aléatoire est dans un état spécifique.

7. Dispositif, comprenant un module de récepteur, un module de commande, et un module de mémoire, dans lequel le module de récepteur est configuré

pour recevoir une demande de configuration de mémoire, et
pour recevoir une demande d'indication de l'intérêt du dispositif pour un service qui est indiqué dans une telle demande,

le module de commande est configuré

pour configurer le module de mémoire conformément à la demande de configuration, et pour stocker au moins une information permettant d'estimer la probabilité conditionnelle que, à une occurrence aléatoire de comptage d'intérêt pour un service, étant donné que le terminal est intéressé par le service demandé, le terminal est dans un état connecté.

8. Dispositif selon la revendication 7, dans lequel le module de commande est en outre configuré pour stocker
une information proportionnelle à la probabilité que, à une occurrence aléatoire de comptage d'intérêt pour un service, le terminal est intéressé par le service demandé, dans lequel l'information proportionnelle à la probabilité comprend facultativement

une indication de la fréquence moyenne d'occurrence d'occasions telles que le terminal ayant fait l'objet d'une demande d'intérêt pour un service par le réseau qui ont été observées par le terminal alors qu'il était intéressé par le service.

9. Dispositif selon la revendication 7 ou 8, comprenant en outre un module d'émetteur configuré pour transmettre l'information stockée dans le module de mémoire.

**10.** Dispositif selon la revendication 1, 4 ou 7, dans lequel
l'information permettant d'estimer la probabilité conditionnelle comprend

une indication de la proportion d'occasions où le terminal était dans un état connecté, parmi toutes les occasions où le terminal ayant fait l'objet d'une demande d'intérêt pour un service par le réseau qui ont été observées par le terminal alors qu'il était intéressé par le service.

**11.** Procédé, comprenant :

l'envoi d'une demande de configuration adaptée à demander à un terminal de configurer une mémoire de journalisation de terminal pour ensuite stocker au moins
une information permettant d'estimer la probabilité conditionnelle que, à une occurrence aléatoire de comptage d'intérêt pour un service, étant donné que le terminal est intéressé par le service demandé, le terminal est dans un état connecté.

**12.** Procédé selon la revendication 11, dans lequel la demande de configuration est en outre adaptée à demander à un terminal de configurer la mémoire de journalisation du terminal pour ensuite stocker
une information proportionnelle à la probabilité que, à une occurrence aléatoire de comptage d'intérêt pour le service, le terminal est intéressé par le service demandé, dans lequel l'information proportionnelle à la probabilité comprend facultativement

une indication de la fréquence moyenne d'occurrence d'occasions telles que le terminal ayant fait l'objet d'une demande d'intérêt pour un service par le réseau qui ont été observées par le terminal alors qu'il était intéressé par le service.

**13.** Procédé selon la revendication 11, comprenant en outre
l'envoi de ladite demande vers un dispositif d'émetteur-récepteur de réseau pour diffusion, ou
la diffusion de ladite demande vers des terminaux.

**14.** Procédé, comprenant :

la réception d'une information d'au moins une mémoire de journalisation de terminal respectif, dans lequel l'information reçue comprend
une information permettant d'estimer la probabilité conditionnelle que, à une occurrence aléatoire de comptage d'intérêt pour un service, étant donné que le terminal est intéressé par le service demandé, le terminal est dans un état connecté.

**15.** Procédé selon la revendication 14, dans lequel l'information reçue comprend en outre
une information proportionnelle à la probabilité que, à une occurrence aléatoire de comptage d'intérêt pour le service, le terminal est intéressé par le service demandé, dans lequel l'information proportionnelle à la probabilité comprend facultativement

une indication de la fréquence moyenne d'occurrence d'occasions telles que le terminal ayant fait l'objet d'une demande d'intérêt pour un service par le réseau qui ont été observées par le terminal alors qu'il était intéressé par le service.

**16.** Procédé selon la revendication 14, comprenant en outre
le traitement de l'information reçue pour calculer une estimation pour la probabilité conditionnelle que, tout en étant intéressé par le service, un terminal aléatoire est dans un état spécifique.

**17.** Procédé, comprenant :

la réception d'une demande de configuration de mémoire, et
la réception d'une demande d'indication de l'intérêt du dispositif pour un service qui est indiqué dans une telle demande,
la configuration d'un module de mémoire conformément à la demande de configuration, et

le stockage d'au moins

une information permettant d'estimer la probabilité conditionnelle que, à une occurrence aléatoire de comptage d'intérêt pour un service, étant donné que le terminal est intéressé par le service demandé, le terminal est dans un état connecté.

**18.** Procédé selon la revendication 17, comprenant en outre

le stockage d'une information proportionnelle à la probabilité que, à une occurrence aléatoire de comptage d'intérêt pour un service, le terminal est intéressé par le service demandé, dans lequel l'information proportionnelle à la probabilité comprend facultativement

une indication de la fréquence moyenne d'occurrence d'occasions telles que le terminal ayant fait l'objet d'une demande d'intérêt pour un service par le réseau qui ont été observées par le terminal alors qu'il était intéressé par le service.

**19.** Procédé selon la revendication 17 ou 18, comprenant en outre la transmission de l'information stockée dans le module de mémoire.

**20.** Procédé selon la revendication 11, 14 ou 17, dans lequel

l'information permettant d'estimer la probabilité conditionnelle comprend

une indication de la proportion d'occasions où le terminal était dans un état connecté, parmi toutes les occasions où le terminal ayant fait l'objet d'une demande d'intérêt pour un service par le réseau qui ont été observées par le terminal alors qu'il était intéressé par le service.

Fig. 1

**Fig. 2**

Fig. 3

Fig. 4